# EUROPÄISCHE PATENTSCHRIFT

(11) **EP 2 734 815 B1**
(45) Veröffentlichungstag und Bekanntmachung des Hinweises auf die Patenterteilung: **20.12.2017**
(21) Anmeldenummer: 12725734.3
(22) Anmeldetag: 01.06.2012
(51) Int. Cl.: G01D 11/24, G01D 11/30

(54) **SENSOREINRICHTUNG, INSBESONDERE FÜR DIE VERWENDUNG IN EINEM KRAFTFAHRZEUG**
SENSOR DEVICE, IN PARTICULAR FOR USE IN A MOTOR VEHICLE
DISPOSITIF DE DÉTECTION DESTINÉ À ÊTRE UTILISÉ EN PARTICULIER DANS UN VÉHICULE AUTOMOBILE

(30) Priorität: 20.07.2011 DE 102011079446
(43) Veröffentlichungstag der Anmeldung: 28.05.2014
(73) Patentinhaber: Robert Bosch GmbH, 70442 Stuttgart (DE)
(72) Erfinder: HENZLER, Stephan, 72810 Gomaringen (DE); HERRMANN, Alexander, 72764 Reutlingen (DE); WOERNLE, Wolfgang, 72149 Neustetten (DE); BERTSCH, Benjamin, 72805 Lichtenstein (DE)
(86) Internationale Anmeldenummer: PCT/EP2012/060416
(87) Internationale Veröffentlichungsnummer: WO 2013/010711

(56) Entgegenhaltungen:
- WO-A1-2009/044942
- WO-A2-2009/121426
- Metalltechnik Lexikon: "Dreipunktauflage, Vorrichtungen", , 18 March 2011 (2011-03-18), Retrieved from the Internet: URL:http://www.metalltechnik-lexikon.de/dr eipunktauflage-vorrichtungen/ [retrieved on 2017-01-18]

## Beschreibung

### Stand der Technik

Die Erfindung betrifft eine Sensoreinrichtung, insbesondere für die Verwendung in einem Kraftfahrzeug, nach dem Oberbegriff des Anspruchs 1.

Eine ähnliche Sensoreinrichtung ist aus der WO 2009/044942 A1 bekannt. Bei der bekannten Sensoreinrichtung ist es vorgesehen, dass ein Schaltungsträger zwischen einem Gehäusedeckel und einem Gehäuseboden im Randbereich des Schaltungsträgers eingespannt ist. Die auf dem Schaltungsträger angeordneten elektrischen Kontakte werden durch im Gehäusedeckel ortsfest angeordnete Kontaktfahnen kontaktiert, die zum Beispiel mit den Anlagekontakte verlötet sind.

Aus der DE 10 2008 000 889 A1 ist eine weitere Sensoreinrichtugn bekannt. Die als Drucksensor ausgebildete Sensoreinrichtung weist ein Gehäuse zur Aufnahme eines Sensorelements auf. Das Sensorelement ist dabei gemäß einer Ausführungsform blockförmig ausgebildet und weist auf seiner Unterseite integriert in dem Sensorelement angeordnete Kontaktflächen zur elektrischen Kontaktierung des Sensorelements mit Anlagekontakten von Steckeranschlüssen auf. Die Steckeranschlüsse sind als Steckerfahnen im Gehäuse angeordnet bzw. ausgebildet, wobei die dem Sensorelement zugewandten, die Anlagekontakte aufweisenden Endbereiche federnd angeordnet bzw. ausgebildet sind. Bei der Montage des Sensorelements in dem Gehäuse wird das Sensorelement gegen eine Oberfläche eines Innenbereichs des Gehäuses angelegt, wobei gleichzeitig die an der Unterseite des Sensorelements angeordneten elektrischen Kontaktflächen in Anlage mit den Anlagekontakten der Steckeranschlüsse geraten und diese dabei kraftbeaufschlagen, so dass diese elastisch verformt werden. Das Niederdrücken bzw. Niederhalten des Sensorelements im Gehäuse erfolgt mittels eines beispielsweise als Gehäusedeckel ausgebildeten Gehäuseelements. Um bei der bekannten Sensoreinrichtung eine sichere elektrische Kontaktierung des Sensorelements bei flächiger Anlage des Sensorelements im Gehäuse zu erreichen, ist die beschriebene elastische bzw. federnde Anordnung der Steckeranschlüsse erforderlich. Die Ausbildung derartiger, im Falle der DE 10 2008 000 889 A1 im Bereich der Anlagekontakte gebogen ausgebildeter und von einem Freiraum zur Gewährleistung der Beweglichkeit der Anlagekontakte aufweisender Steckeranschlüsse ist jedoch relativ aufwändig.

### Offenbarung der Erfindung

Ausgehend von dem dargestellten Stand der Technik liegt der Erfindung die Aufgabe zugrunde, eine Sensoreinrichtung nach dem Oberbegriff des Anspruchs 1 derart weiterzubilden, dass eine besonders einfache Herstellbarkeit der Kontaktierung zwischen den Steckeranschlüssen und dem Sensorelement bei gleichzeitig günstigen Herstellkosten und zuverlässiger elektrischer Kontaktierung ermöglicht wird. Diese Aufgabe wird bei einer Sensoreinrichtung mit den Merkmalen des Anspruchs 1 erfindungsgemäß dadurch gelöst, dass zwischen dem Sensorelement und dem Gehäuse eine Auflage ausgebildet ist, derart, dass das Sensorelement eine 3-Punkt-Anlage im Gehäuse aufweist, wobei die 3-Punkt-Anlage zwischen den elektrischen Kontaktflächen und den Anlagekontakten sowie in einem Auflagebereich zwischen dem Sensorelement und dem Gehäuse als jeweils Auflagen ausgebildet sind, vorzugsweise durch punktförmige Ausbildung der Anlagekontakte und eine punktförmige Ausbildung des Auflagebereichs am Gehäuse. Durch eine derartige 3-Punkt-Anlage des Sensorelements im Gehäuse ist eine definierte elektrische Kontaktierung des Sensorelements an den Steckeranschlüssen gewährleistet.

Vorteilhafte Weiterbildungen der erfindungsgemäßen Sensoreinrichtung sind in den Unteransprüchen aufgeführt.

Um einen besonders rationellen Montageprozess bei der Verwendung einer möglichst geringen Anzahl von Gehäuseteilen zu realisieren, ist es darüber hinaus bevorzugt vorgesehen, dass das Gehäuseelement ein Gehäusedeckel ist, und dass das Sensorelement vom Gehäusedeckel überdeckt ist. Dadurch wird ein Montageprozess ermöglicht, bei dem das in dem Gehäuse angeordnete Sensorelement vom Gehäusedeckel in Richtung der 3-Punkt-Anlage gedrückt wird, wobei der Gehäusedeckel gleichzeitig das Gehäuse verschließt.

Ganz besonders bevorzugt ist eine Ausgestaltung, bei der zwischen dem Gehäusedeckel und dem Sensorelement ein elastisches Zwischenelement angeordnet ist. Dadurch lassen sich Bauteiltoleranzen ausgleichen und ein sicherer elektrischer Kontakt herstellen.

Insbesondere bei der Verwendung als Drucksensor kann es dabei vorgesehen sein, dass das Sensorelement eine Messoberfläche aufweist, die vom Zwischenelement umgeben und zum Gehäuseinnenraum abgedichtet ist, und dass der Gehäusedeckel einen Kanal aufweist, der den Bereich der Messoberfläche mit der Umgebung verbindet. Dabei wird durch das Zwischenelement, das die Messoberfläche dichtend umgibt, eine gezielte Luftführung durch den Kanal in Richtung auf die Messoberfläche ermöglicht, sodass ein derartiger Drucksensor besonders sicher und zuverlässig arbeitet.

Um eine möglichst einfache und kostengünstige, dabei jedoch unter funktionellen Gesichtspunkten besonders sichere Montage des Gehäuseelements mit dem Gehäuse zu ermöglichen, wird darüber hinaus vorgeschlagen, dass das Gehäuseelement mit dem Gehäuse durch eine Rastverbindung verbunden ist. Eine derartige Rastverbindung lässt sich ohne zusätzliche Hilfsstoffe oder Verbindungselemente (Klebstoffe, Schrauben) sehr einfach, ggf. ohne Hilfsvorrichtungen, realisieren.

Um die zwischen dem Gehäuseelement und dem Gehäuse ausgebildete Rastverbindung nach außen hin abzudichten, sodass der Gehäuseinnenraum vor dem Eintritt von Feuchtigkeit oder ähnlichem geschützt ist, wird darüber hinaus vorgeschlagen, dass zwischen dem Gehäuseelement und dem Gehäuse ein Dichtelement angeordnet ist, das beim Ausbilden der Rastverbindung kraftbeaufschlagbar ist.

Der Montageprozess des Gehäuseelements am Gehäuse lässt sich darüber hinaus besonders sicher und zuverlässig gestalten, wenn Führungselemente zur winkelgerechten Montage des Gehäuseelements am Gehäuse vorhanden sind. Dadurch werden insbesondere mögliche Fehlmontagen mit ggf. dabei stattfindenden Beschädigungen an Bauteilen vermieden.

Eine weitere Ausgestaltung der Erfindung sieht vor, dass in dem Gehäuse eine Positioniereinrichtung zur Positionierung des Sensorelements zu den Anlagekontakten vorgesehen ist. Dadurch wird insbesondere bei der Montage des Gehäuseelements bzw. des Gehäusedeckels gewährleistet, dass das Sensorelement in seiner richtigen Lage zu den Steckerkontakten angeordnet ist.

Weitere Vorteile, Merkmale und Einzelheiten der Erfindung ergeben sich aus der nachfolgenden Beschreibung bevorzugter Ausführungsbeispiele sowie anhand der Zeichnung.

### Diese zeigt in:

- Fig. 1: einen Längsschnitt durch eine erfindungsgemäße Sensoreinrichtung, die als Drucksensoreinrichtung in einem Kraftfahrzeug vorgesehen ist,
- Fig. 2: eine perspektivische Draufsicht auf ein Gehäuse, wie es als Bestandteil der Sensoreinrichtung gemäß Fig. 1 verwendet wird,
- Fig. 3: eine perspektivische Unteransicht eines Gehäusedeckels zur Verwendung bei der Sensoreinrichtung gemäß Fig. 1,
- Fig. 4: eine Darstellung des Gehäuses, eines Sensorelements und des Gehäusedeckels der Sensoreinrichtung gemäß Fig. 1 und
- Fig. 5: die Bauteile gemäß Fig. 4 in einer perspektivischen Ansicht von unten.

Gleiche Bauteile bzw. Bauteile mit gleicher Funktion sind in den Figuren mit den gleichen Bezugsziffern versehen.

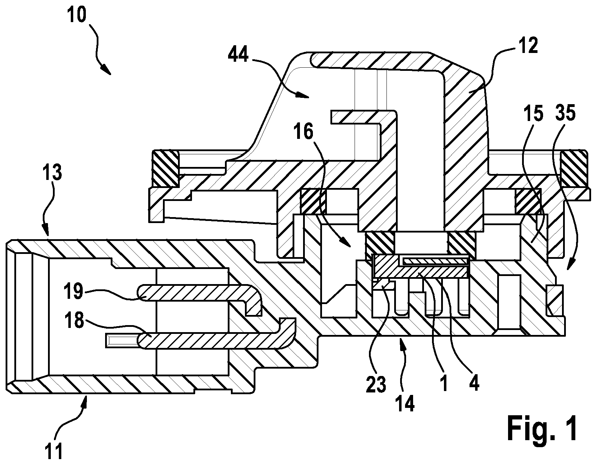

In der Fig. 1 ist eine erfindungsgemäße Sensoreinrichtung 10 dargestellt, wie sie als Drucksensor zur Verwendung in einem Kraftfahrzeug vorgesehen ist. Die Erfindung soll jedoch nicht auf Drucksensoren beim Einsatz in Kraftfahrzeugen beschränkt sein, sondern kann, ggf. mit entsprechenden Anpassungen bzw. Modifikationen, auf beliebige andere Sensoreinrichtungen übertragen werden.

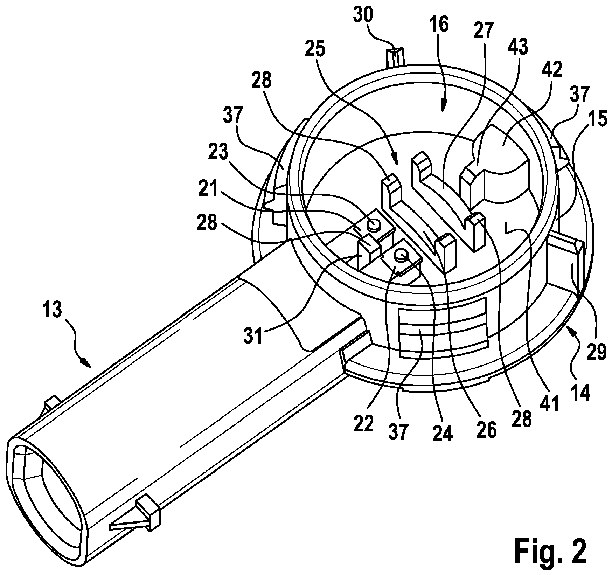

Die Sensoreinrichtung 10 weist ein Gehäuse 11 in Form eines Gehäuseunterteils auf, das mittels eines Gehäusedeckels 12 verschließbar ist. Wie insbesondere anhand einer Zusammenschau der Fig. 1 und 2 erkennbar ist, umfasst das Gehäuse 11 einen länglichen Steckeranschlussbereich 13, an den sich ein in Draufsicht im Wesentlichen rund ausgebildeter Aufnahmebereich 14 zur Aufnahme eines in den Fig. 1, 4 und 5 dargestellten Sensorelements 1 anschließt. Der Aufnahmebereich 14 weist eine kreisförmig umlaufende Wand 15 auf, die einen Innenraum 16 zur Aufnahme des angesprochenen Sensorelements 1 ausbildet. In dem Gehäuse 11 sind zwei Steckeranschlüsse 18, 19 angeordnet, die insbesondere beim Ausbilden des Gehäuses 11 im Kunststoffspritzverfahren in dem Gehäuse 11 mit umspritzt und somit fixiert aufgenommen werden. Wesentlich dabei ist, wie insbesondere anhand der Fig. 2 erkennbar ist, dass die dem Sensorelement 1 zugewandten Enden der Steckeranschlüsse 18, 19 im Bereich von in etwa rechteckförmigen Arealen 21, 22 von dem Material bzw. dem Kunststoff des Gehäuses 11 nicht umspritzt, sondern freigelassen sind. Die Areale 21, 22 bilden in Richtung des Sensorelements 1 punktförmige Anlagekontakte, 23, 24 aus.

Zusätzlich ist im Innenraum 16 eine einstückig am Gehäuse 11 angeformte Positioniereinrichtung 25 mit drei Führungselementen 26, 27 und 31 angeordnet, die Führungsstege 28 aufweisen, die derart ausgerichtet bzw. angeordnet sind, dass bei in dem Innenraum 16 angeordnetem Sensorelement 1 das Sensorelement 1 in einer Lage positioniert wird, in der insbesondere eine zuverlässige und sichere elektrische Kontaktierung des Sensorelements 1 mit den Anlagekontakten 23, 24 der Steckeranschlüsse 18, 19 erfolgt.

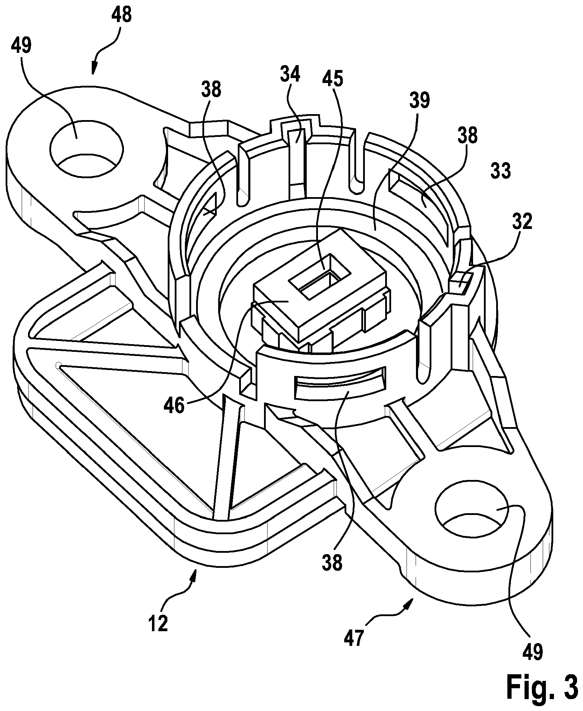

An der Außenseite der Wand 15 sind zwei stegförmige Führungsrippen 29, 30 angeordnet, die mit in der Fig. 3 erkennbaren, an einer Gehäusedeckelwand 32 ausgebildeten Führungsnuten 33, 34 zusammenwirken, derart, dass der Gehäusedeckel 12 insbesondere nur in einer einzigen (richtigen) Winkellage auf dem Gehäuse 11 montiert werden kann. Weiterhin sind an der Außenseite der Wand 15 drei, um 120° zueinander versetzt angeordnete Rastclipse 37 als Teil einer Rastverbindung 35 zwischen dem Gehäuse 11 und dem Gehäusedeckel 12 einstückig angeformt, die mit im Gehäusedeckelrand 32 ausgebildeten Rastöffnungen 38 zusammenwirken. Um beim Ausbilden der Rastverbindung 35 zwischen dem Gehäuse 11 und dem Gehäusedeckel 12 die Sensoreinrichtung 10 nach außen hin abzudichten, derart, dass z.B. keine Feuchtigkeit in die Sensoreinrichtung 10 eindringen kann, weist der Gehäusedeckel 12 in Ausrichtung mit der Wand 15 des Gehäuses 11 ein ringförmiges, elastisches Dichtungselement 39 auf.

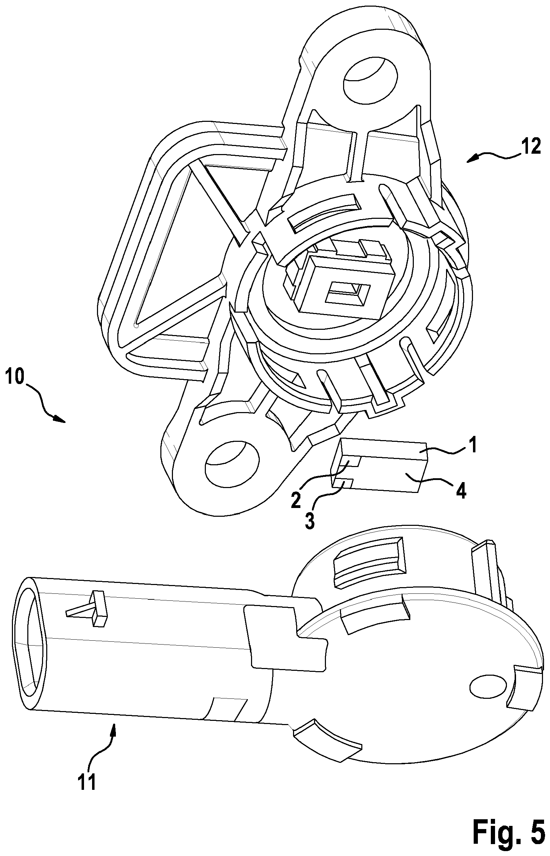

Das als Drucksensor ausgebildete Sensorelement 1 ist blockförmig ausgebildet und weist an seiner Unterseite 4 zwei, in der Fig. 5 erkennbare, in etwa rechteckförmige Kontaktflächen 2, 3 auf, die zur elektrischen Kontaktierung mit den Anlagekontakten 23, 24 dienen. Auf der Oberseite des Sensorelements 1 weist dieses eine Messoberfläche 5 auf, über die Luftdruckunterschiede erfassbar und mit einer in dem Sensorelement 1 angeordneten Auswertelogik verarbeitbar sind.

Erfindungsgemäß ist es vorgesehen, dass die Anordnung bzw. Befestigung des Sensorelements 1 in dem Gehäuse 11 bzw. in dem Innenraum 16 des Gehäuses 11 über eine 3-Punkt-Anlage erfolgt. Hierbei bilden die beiden Kontaktflächen 2, 3, zusammen mit den Anlagekontakten 23, 24 der Steckeranschlüsse 18, 19 zwei der drei Anlagepunkte aus. Der dritte Anlagepunkt wird ausgebildet zwischen der Unterseite 4 des Sensorelements 1 und einem in dem Innenraum 16 des Gehäuses 11 angeordneten, vom Boden 41 des Innenraums 16 sich in Richtung des Sensorelements 1 erhebenden Gegenlager 42, dessen der Unterseite 4 des Sensorelements 1 zugewandte Oberseite 43 beispielsweise kuppelartig ausgebildet ist.

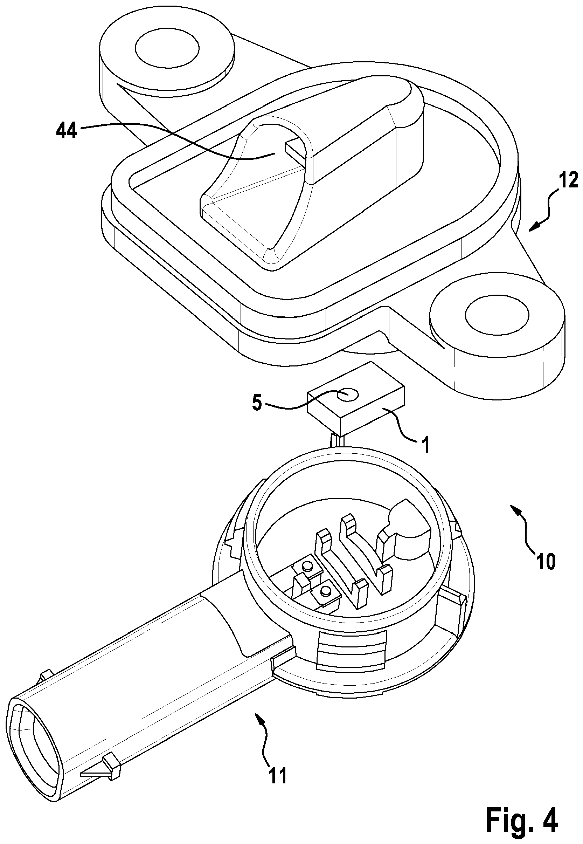

Der Gehäusedeckel 12 weist, wie insbesondere anhand einer Zusammenschau der Fig. 3 und 4 erkennbar ist, an seiner Außenseite einen zur Umgebung der Sensoreinrichtung 10 hin offenen Messkanal 44 auf, der im Überdeckungsbereich mit der Messoberfläche 5 des Sensorelements 1 in einer Öffnung 45 mündet. Die Öffnung 45 ist von einem inneren, zweiten Dichtungselement 46 umgeben, das bei auf dem Gehäuse 11 montierten Gehäusedeckel 12 die Messoberfläche 5 mit Abstand umgibt und diese zum Innenraum 16 hin abdichtet, derart, dass über den Messkanal 44 auftretende (Luftdruck-) Druckschwankungen direkt auf die Messoberfläche 5 des Sensorelements 1 wirken.

Zusätzlich weist der Gehäusedeckel 12 noch zwei Befestigungsflansche 47, 48 mit Durchgangslöchern 49 auf, die zur Montage der Sensoreinrichtung 10 an einem Teil des Kraftfahrzeugs dienen.

Die Montage der Sensoreinrichtung 10 geschieht wie folgt: In einem ersten Montageschritt wird das Sensorelement 1 in den Innenraum 16 des Gehäuses 11 eingebracht. Dabei wird durch die Positioniereinrichtung 25 eine lagerichtige Positionierung des Sensorelements 1, insbesondere zu den Anlagekontakten 23, 24 und dem Gegenlager 42, sichergestellt, derart, dass zwischen den Kontaktflächen 2, 3 und den Anlagekontakten 23, 24 sowie zwischen der Unterseite 4 des Sensorelements 1 und dem Gegenlager 42 die angesprochene 3-Punkt-Anlage ausgebildet wird, welche eine statisch definierte Anlage des Sensorelements 1 in dem Gehäuse 11 sicherstellt. Anschließend wird in einem zweiten Montageschritt der Gehäusedeckel 12 mit dem Gehäuse 11 über die Rastverbindung 35 verbunden. Dabei wird über das zweite Dichtungselement 46 eine Niederdrück- bzw. Anpresskraft auf das Sensorelement 1 in dem Gehäuse 11 ausgeübt, derart, dass insbesondere eine sichere elektrische Kontaktierung des Sensorelements 1 im Bereich der Anlagekontakte 23, 24 gewährleistet ist. Gleichzeitig findet die Abdichtung des Gehäusedeckels 12 zum Gehäuse 11 hin über das Dichtungselement 39 statt. Nach der Montage des Gehäusedeckels 12 an dem Gehäuse 11 ist die Montage der Sensoreinrichtung 10 abgeschlossen.

Die soweit beschriebene Sensoreinrichtung 10 kann in vielfältiger Art und Weise abgewandelt bzw. modifiziert werden, ohne vom Erfindungsgedanken abzuweichen. Dieser besteht in einer 3-Punkt-Anlage des Sensorelements 1 in dem Gehäuse 11, um die sichere elektrische Kontaktierung des Sensorelements 1 mit den Steckeranschlüssen 18, 19 herzustellen, die ortsfest bzw. starr angeordnet sind.

## Patentansprüche

1. Sensoreinrichtung (10), die dazu ausgebildet ist, insbesondere in einem Kraftfahrzeug verwendet zu werden, mit einem Sensorelement (1) und einem Gehäuse, welches (11) zur Aufnahme des Sensorelements (1) ausgebildet ist, wobei das Sensorelement (1) auf seiner Unterseite (4) elektrische Kontaktflächen (2, 3) aufweist, die mit im Gehäuse (11) angeordneten elektrischen Steckeranschlüssen (18, 19) im Bereich von Anlagekontakten (23, 24) der Steckeranschlüsse (18, 19) elektrisch leitend verbunden sind, wobei die elektrischen Steckeranschlüsse (18, 19) im Gehäuse (11) im Bereich der Anlagekontakte (23, 24) mit den elektrischen Kontaktflächen (2, 3) des Sensorelements (1) ortsfest angeordnet sind und zwischen der Unterseite (4) des Sensorelements (1) und dem Gehäuse (11) eine Auflage aufgrund einer 3-Punkt-Anlage ausgebildet ist, wobei davon zwischen den elektrischen Kontaktflächen (2, 3) und den Anlagekontakten (23, 24) der Steckeranschlüsse (18, 19) zwei Anlagepunkte und zwischen einem Auflagebereich des Gehäuses (11) und der dem Gehäuse (11) zugewandten Unterseite (4) des Sensorelements (1) ein dritter Anlagepunkt ausgebildet sind, wobei das Sensorelement (1) dazu ausgebildet ist, zur elektrischen Kontaktierung von einem Gehäuseelement in Richtung der 3-Punkt-Anlage kraftbeaufschlagt zu werden und durch die 3-Punkt-Anlage eine statisch definierte Anlage des Sensorelementes (1) in dem Gehäuse (11) sichergestellt ist.

2. Sensoreinrichtung nach Anspruch 1, **dadurch gekennzeichnet, dass** zwischen den elektrischen Kontaktflächen (2, 3) und den Anlagekontakten (23, 24) sowie in dem Auflagebereich zwischen dem Sensorelement (1) und dem Gehäuse (11) jeweils punktförmige Auflagen ausgebildet sind, vorzugsweise durch punktförmige Ausbildung der Anlagenkontakte (23, 24) und eine punktförmige Ausbildung des Auflagebereichs (27) am Gehäuse.

3. Sensoreinrichtung nach Anspruch 2,
**dadurch gekennzeichnet, dass**
der Auflagebereich zwischen der Unterseite des Sensorelements (1) und dem Gehäuse (11) gebildet ist durch einen in dem Innenraum (16) des Gehäuses (11) angeordneten, vom Boden (41) des Innenraums (16) sich in Richtung des Sensorelementes (1) erhebenden Gegenlagers (42).

4. Sensoreinrichtung nach Anspruch 3,
**dadurch gekennzeichnet, dass**
die der Unterseite (4) des Sensorelementes (1) zugewandte Oberseite (43) des Gegenlagers (42) kuppelartig ausgebildet ist.

5. Sensoreinrichtung nach einem der Ansprüche 1 bis 4,
**dadurch gekennzeichnet,**
**dass** das Gehäuseelement ein Gehäusedeckel (12) ist, und dass das Sensorelement (1) vom Gehäusedeckel (12) überdeckt ist.

6. Sensoreinrichtung nach Anspruch 5,
**dadurch gekennzeichnet,**
**dass** zwischen dem Gehäusedeckel (12) und dem Sensorelement (1) ein elastisches Zwischenelement (46) angeordnet ist.

7. Sensoreinrichtung nach Anspruch 6,
**dadurch gekennzeichnet,**
**dass** das Sensorelement (1) eine Messoberfläche (5) aufweist, die vom Zwischenelement (46) umgeben und zum Gehäuseinnenraum (16) hin abgedichtet ist, und dass der Gehäusedeckel (12) einen Kanal (44) aufweist, der den Bereich der Messoberfläche (5) mit der Umgebung verbindet.

8. Sensoreinrichtung nach einem der vorhergehenden Ansprüche,
**dadurch gekennzeichnet,**
**dass** die Steckeranschlüsse (18, 19) im Bereich der Anlagekontakte (23, 24), die Anlagekontakte (23, 24) freilassend, im Gehäuse (11) umspritzt sind.

9. Sensoreinrichtung nach einem der vorhergehenden Ansprüche,
**dadurch gekennzeichnet,**
**dass** das Gehäuseelement mit dem Gehäuse (11) durch eine Rastverbindung (35) verbunden ist.

10. Sensoreinrichtung nach Anspruch 9,
**dadurch gekennzeichnet,**
**dass** zwischen dem Gehäuseelement und dem Gehäuse (11) ein Dichtelement (39) angeordnet ist, das beim Ausbilden der Rastverbindung (35) kraftbeaufschlagbar ist.

11. Sensoreinrichtung nach Anspruch 9 oder 10,
**dadurch gekennzeichnet,**
**dass** Führungselemente (29, 30, 33, 34) zur winkelgerechten Montage des Gehäuseelements am Gehäuse (11) vorhanden sind.

12. Sensoreinrichtung nach einem der vorhergehenden Ansprüche,
**dadurch gekennzeichnet,**
**dass** in dem Gehäuse (11) eine Positioniereinrichtung (25) zur Positionierung des Sensorelements (1) zu den Anlagekontakten (23, 24) vorgesehen sind.

## Claims

1. Sensor device (10) which is designed to be used, in particular, in a motor vehicle, having a sensor element (1) and a housing which (11) is designed to accommodate the sensor element (1), wherein the sensor element (1) has, on its underside (4), electrical contact faces (2, 3) which are connected in an electrically conductive fashion to electrical plug connections (18, 19), arranged in the housing (11), in the region of bearing contacts (23, 24) of the plug connections (18, 19), wherein the electrical plug connections (18, 19) are arranged in a positionally fixed fashion in the housing (11) in the region of the bearing contacts (23, 24) with the electrical contact faces (2, 3) of the sensor element (1), and a supporting arrangement is formed between the underside (4) of the sensor element (1) and the housing (11) owing to a 3-point bearing arrangement, wherein two bearing points are formed thereby between the electrical contact faces (2, 3) and the bearing contacts (23, 24) of the plug connections (18, 19), and a third bearing point is formed between a bearing region of the housing (11) and the underside (4), facing the housing (11), of the sensor element (1), wherein the sensor element (1) is designed to have force applied to it in order to form electrical contact with a housing element in the direction of the 3-point bearing arrangement, and statically defined bearing of the sensor element (1) in the housing (11) is ensured by the 3-point bearing arrangement.

2. Sensor device according to Claim 1,
**characterized in that**
punctiform support arrangements are respectively formed between the electrical contact faces (2, 3) and the bearing contacts (23, 24), as well as in the support region between the sensor element (1) and the housing (11), preferably by punctiform formation of the bearing contacts (23, 24) and the punctiform formation of the support region (27) on the housing.

3. Sensor device according to Claim 2,
**characterized in that**
the support region between the underside of the sensor element (1) and the housing (11) is formed by a counter bearing (42) arranged in the interior (16) of the housing (11) which rises in the direction of the sensor element (1) from the floor (41) of the interior (16).

4. Sensor device according to Claim 3,
**characterized in that**
the upper side (43) of the counter bearing (42), facing the underside (4) of the sensor element (1), is embodied in a dome-like fashion.

5. Sensor device according to one of Claims 1 to 4, **characterized in that**
the housing element is a housing cover (12), and **in that** the sensor element (1) is covered by the housing cover (12).

6. Sensor device according to Claim 5,
**characterized in that**
an elastic intermediate element (46) is arranged between the housing cover (12) and the sensor element (1).

7. Sensor device according to Claim 6,
**characterized in that**
the sensor element (1) has a measuring surface (5) which is surrounded by the intermediate element (46) and is sealed with respect to the housing interior (16), and **in that** the housing cover (12) has a duct (44) which connects the region of the measuring surface (5) to the surroundings.

8. Sensor device according to one of the preceding claims,
**characterized in that**
the plug connections (18, 19) are encapsulated by injection moulding in the housing (11), in the region of the bearing contacts (23, 24), in such a way as to leave the bearing contacts (23, 24) exposed.

9. Sensor device according to one of the preceding claims,
**characterized in that**
the housing element is connected to the housing (11) by a latching connection (35).

10. Sensor device according to Claim 9,
**characterized in that**
a sealing element (39), to which force can be applied during the formation of the latching connection (35), is arranged between the housing element and the housing (11).

11. Sensor device according to Claim 9 or 10,
**characterized in that**
guide elements (29, 30, 33, 34) are provided for correctly angled mounting of the housing element on the housing (11).

12. Sensor device according to one of the preceding claims,
**characterized in that**
a positioning device (25) for positioning the sensor element (1) with respect to the bearing contacts (23, 24) are provided in the housing (11).

## Revendications

1. Dispositif de détection (10), qui est notamment conçu pour être utilisé dans un véhicule automobile, comportant un élément de détection (1) et un boîtier, qui (11) est conçu pour recevoir l'élément de détection (1), dans lequel l'élément de détection (1) comporte sur sa face inférieure (4) des surfaces de contact électriques (2, 3) qui sont reliées de manière électriquement conductrice à des connecteurs à fiches (18, 19) disposés dans le boîtier (11) dans la région de contacts d'appui (23, 24) des connecteurs électriques à fiches (18, 19), dans lequel les connecteurs électriques à fiches (18, 19) sont disposés en position fixe dans le boîtier (11) dans la région des contacts d'appui (23, 24) avec les surfaces de contact électriques (2, 3) de l'élément de détection (1) et un revêtement ayant pour base un appui à 3 points est réalisé entre la face inférieure (4) de l'élément de détection (1) et le boîtier (11), dans lequel, parmi ceux-ci, deux points d'appui sont réalisés entre les surfaces de contact électriques (2, 3) et les contacts d'appui (23, 24) des connecteurs à fiches (18, 19) et un troisième point d'appui est réalisé entre une zone de revêtement du boîtier (11) et la face inférieure (4) de l'élément de détection (1) qui est tournée vers le boîtier (11), dans lequel l'élément de détection (1) est conçu, aux fins de la mise en contact électrique avec un élément de boîtier, pour être soumis à une force dans la direction de l'appui à 3 points, et un appui statique défini de l'élément de détection (1) dans le boîtier (11) est assuré par l'appui à 3 points.

2. Dispositif de détection selon la revendication 1,
**caractérisé en ce que** des revêtements sont respectivement réalisés sous forme ponctuelle entre les surfaces de contact électriques (2, 3) et les contacts d'appui (23, 24) ainsi que dans la zone de revêtement entre l'élément de détection (1) et le boîtier (11), de préférence par réalisation sous forme ponctuelle des contacts d'appui (23, 24) et par réalisation sous forme ponctuelle de la zone de revêtement (27) sur le boîtier.

3. Dispositif de détection selon la revendication 2,
**caractérisé en ce que** la zone de revêtement est formée entre la face inférieure de l'élément de détection (1) et le boîtier (11) par un contre-palier (42) disposé dans l'espace intérieur (16) du boîtier (11), et s'élevant depuis le fond (41) de l'espace intérieur (16) dans la direction de l'élément de détection (1).

4. Dispositif de détection selon la revendication 3,
**caractérisé en ce que** la face supérieure (43) du contre-palier (42) qui est tournée vers la face inférieure (4) de l'élément de détection (1) est réalisée sous la forme d'une coupelle.

5. Dispositif de détection selon l'une quelconque des revendications 1 à 4,
**caractérisé en ce que** l'élément de boîtier est un capot de boîtier (12), et **en ce que** l'élément de détection (1) est recouvert par le capot de boîtier (12).

6. Dispositif de détection selon la revendication 5,
**caractérisé en ce qu'**un élément intermédiaire élastique est disposé (46) entre le capot de boîtier (12) et l'élément de détection (1).

7. Dispositif de détection selon la revendication 6,
**caractérisé en ce que** l'élément de détection (1) comporte une surface de mesure (5) qui est entourée par l'élément intermédiaire (46) et est rendue étanche vers l'espace intérieur du boîtier (16), et **en ce que** le capot de boîtier (12) comporte un canal (44) qui relie la région de la surface de mesure (5) à l'environnement.

8. Dispositif de détection selon l'une quelconque des revendications précédentes,
**caractérisé en ce que** les connecteurs à fiches (18, 19) sont enrobés dans le boîtier (11) tout en libérant les contacts d'appui (23, 24) dans la région des contacts d'appui (23, 24).

9. Dispositif de détection selon l'une quelconque des revendications précédentes,
**caractérisé en ce que** l'élément de boîtier est relié au boîtier (11) par une liaison par encliquetage (35).

10. Dispositif de détection selon la revendication 9,
**caractérisé en ce qu'**un élément d'étanchéité (39) est disposé entre l'élément de boîtier et le boîtier (11), lequel élément peut être soumis à une force lors de la réalisation de la liaison par encliquetage (35).

11. Dispositif de détection selon la revendication 9 ou 10,
**caractérisé en ce qu'**il est prévu des éléments de guidage (29, 30, 33, 34) permettant de monter à angle droit l'élément de boîtier sur le boîtier (11).

12. Dispositif de détection selon l'une quelconque des revendications précédentes,
**caractérisé en ce qu'**ils sont prévus dans le boîtier (11) un dispositif de positionnement (25) permettant de positionner l'élément de détection (1) par rapport aux contacts d'appui (23, 24).
